# EUROPÄISCHE PATENTSCHRIFT

(11) **EP 2 017 028 B1**
(45) Veröffentlichungstag und Bekanntmachung des Hinweises auf die Patenterteilung: **27.01.2016**
(21) Anmeldenummer: 08011389.7
(22) Anmeldetag: 24.06.2008
(51) Int. Cl.: B23K 9/20

(54) **Verfahren zur Befestigung eines laschenförmigen Blechstreifens an der Aussenseite einer Metallwanne**
Method for attaching a plate-like sheet metal strip to the exterior side of a metal bath
Procédé de fixation d'une bande de tôle en forme de languette à l'extérieur d'un récipient en métal

(30) Priorität: 16.07.2007 DE 102007033364
(43) Veröffentlichungstag der Anmeldung: 21.01.2009
(73) Patentinhaber: Franz Kaldewei GmbH & Co. KG, 59229 Ahlen (DE)
(72) Erfinder: Holtrup, Andreas, 59368 Werne (DE); Dahlhues, Thomas, 59387 Ascheberg (DE)
(74) Vertreter: Albrecht, Rainer Harald

(56) Entgegenhaltungen:
- EP-A- 1 410 869
- WO-A-2005/118200
- JP-A- 58 020 383

## Beschreibung

Die Erfindung betrifft ein Verfahren zur Befestigung eines laschenförmigen Blechstreifens, insbesondere einer Aufhängelasche oder einer Erdungslasche, an der Außenseite einer Metallwanne.

In der Praxis werden Erdungs- und Aufhängelaschen durch Widerstandsschweißverfahren an der Außenseite der Metallwanne befestigt. Durch elektrische Widerstandserwärmung werden die zu verbindenden Metallflächen lokal aufgeschmolzen und durch eine Schweißverbindung zusammengefügt. Die Schweißwärme kann zu einer Beeinträchtigung der Oberflächenqualität der beiden verschweißten Metallbleche führen. Insbesondere können die Schweißelektroden auch an der Wanneninnenseite Markierungen bilden, die bei einer nachfolgenden Beschichtung oder Emaillierung der Wanne nicht akzeptabel sind, so dass die Wannenfläche vor einer Beschichtung oder Emaillierung nachbearbeitet werden muss.

In anderen Bereichen der Technik, z. B. bei der Herstellung von Fahrzeugkarosserien, werden Kurzzeit-Lichtbogenschweißverfahren eingesetzt, um Bolzen, Muttern, Ösen oder dergleichen, die z. B. als Halteanker für Innenraumverkleidungen dienen, auf das Karosserieblech aufzuschweißen (DE 101 36 991 A1; DE 101 44 256 A1). Kurzzeit Lichtbogenschweißverfahren werden in der Praxis auch als Bolzenschweißverfahren bezeichnet. Sie sind für das Verschweißen von bolzenförmigen Elementen mit Metallblechen ausgelegt und auf die Verbindung von flächig aufeinanderliegenden Blechen nicht ohne Weiteres übertragbar.

Aus der JP 58-020383 A1 ist ein Verfahren zum Anschweißen von Blechstreifen an einer ebenen Blechplatte bekannt, wobei die ebene Blechplatte mit Ausprägungen versehen ist.

Vor diesem technologischem Hintergrund liegt der Erfindung die Aufgabe zugrunde, das Verfahren anzugeben, mit dem laschenförmige Blechstreifen, beispielsweise Aufhängelaschen oder Erdungslaschen, an der Außenseite einer Metallwanne befestigt werden können, ohne dass die noch zu beschichtende oder zu emaillierende Oberfläche der Wanne beeinträchtigt wird. Das Verfahren soll fertigungstechnisch einfach sein und variabel auf unterschiedliche Laschenformeln anwendbar sein.

Gegenstand der Erfindung und Lösung dieser Aufgabe ist ein Verfahren zur Befestigung eines laschenförmigen Blechstreifens an der Außenseite einer Metallwanne, wobei der Blechstreifen mit mindestens einer Ausprägung versehen wird und die von der Oberfläche des Blechstreifens vorstehende Ausprägung durch eine Kurzzeit-Lichtbogenschweißung mit der Metallwanne verbunden wird. Mit dem Verfahren können insbesondere Aufhängelaschen und Erdungslaschen an der Außenseite der Metallwanne befestigt werden. Aufhängelaschen werden benötigt, um die Metallwanne an einer Transportrichtung anzuschließen und die Metallwanne weiteren Bearbeitungsstationen zuzuführen, in dem die Wanne beispielsweise beschichtet oder emailliert wird. Erdungslaschen sind so aufgelegt, dass sie leitfähige Verbindung der Metallwanne mit der Umgebung sicherstellen.

Bei dem erfindungsgemäßen Verfahren wird der laschenförmige Metallstreifen in einem ersten Verfahrensschritt einer Pressvorrichtung zugeführt, in dem wenigstens eine Ausprägung in dem Metallstreifen eingebracht wird. Die Ausprägung ist dabei erhaben und steht von der Oberfläche des Metallstreifens vor. In einem zweiten Verfahrensschritt wird der mit der Ausprägung versehende Metallstreifen einer Schweißvorrichtung für eine Kurzzeit-Lichtbogenschweißung zugeführt. Die Ausprägung des laschenförmigen Metallstreifens wird zunächst mit der von der Oberfläche des Metallstreifens vorstehenden Seite über eine Anschweißstelle an der Metallwanne positioniert. Durch den von einer Energiequelle aufgebrachten Schweißstrom wird ein Lichtbogen zwischen der Ausprägung und einer Anschweißstelle an der Außenseite der Metallwanne gebildet, durch den die Metallflächen oberflächlich aufgeschmolzen werden. Anschließend wird die Ausprägung in einer Hubbewegung an die Anschweißstelle gedrückt, so dass die schmelzflüssigen Oberflächen der Ausprägung und der Anschweißstelle vermischt werden und eine Schweißverbindung gebildet wird. Die zur Bildung der Schweißverbindung benötigte Schweißzeit beträgt dabei üblicherweise 0,1 bis 2 sec. Die Schweißzeit ist entscheidend für den Einbrand, da sich mit steigender Schweißzeit die Werkstoffe des metallischen Elementes und der Metallwanne immer stärker mischen. Durch die kurze Schweißzeit wird ferner sichergestellt, dass die Oberfläche der Metallwanne keine negativen Veränderungen ihrer Eigenschaften erfährt.

Im Rahmen einer zweckmäßigen Ausgestaltung der Erfindung wird die Ausprägung als Kalotte oder Halbschale ausgebildet. Die Kalotte wird der Anschweißstelle an der Außenseite der Metallwanne so zugeordnet, dass ihre Kugelkappe eine Kontaktfläche für die Bildung der Schweißverbindung mit der Metallwanne darstellt. Die Ausprägung kann im Rahmen der Erfindung eine kreisförmige oder ovale Grundfläche aufweisen. Es versteht sich ferner, dass die Ausprägung auch mit jeder anderen dreidimensionalen Ausgestaltung, beispielsweise mit einer zylindrischen, kegeligen, tetraedrischen, hexaedrischen oder ellipsoidischen Form versehen werden kann. An der Kontaktfläche der kugelförmigen Kalotte kann die Ausprägung auch mit einer Abflachung oder Vertiefung ausgestattet werden. Durch diese bevorzugten Ausgestaltungen werden die Schweißbedingungen sowie die Eigenschaften der Schweißverbindungen verbessert. Insbesondere wird ein klar begrenzter Bereich für die Schweißverbindung geschaffen, wodurch ein Einfluss der im Zuge der Kurzzeit-Lichtbogenschweißung entstehenden Schweißwärme auf die von der Schweißverbindung abgewandte Rückseite der Metallwanne weiter verringert werden können.

Die Kurzzeit-Lichtbogenschweißung kann mit einem Schweißbadschutz durchgeführt werden. Dabei wird die Schweißverbindung unter einer Schutzgasatmosphäre aus beispielsweise Reinargon oder einem Mischgas aus Argon und Helium gebildet. Der Einsatz eines Keramikringes als Schweißbadschutz führt zu einer Konzentrierung des Lichtbogens auf den Bereich zwischen der Ausprägung und der Anschweißstelle an der Metallwanne, so dass auch nur ein kleiner Bereich der Metallwannenoberfläche durch die Schweißwärme beeinflusst wird. Insgesamt wird durch den Einsatz eines Schweißbadschutzes verhindert, dass die schmelzflüssigen Oberflächen an der Ausprägung des laschenförmigen Blechstreifens und der zugeordneten Anschweißstelle der Metallwanne mit der Atmosphäre reagieren und so die Schweißverbindung beispielsweise durch die Bildung von Oxiden geschwächt wird. Ferner können allgemein Verunreinigungen der Schweißverbindung verhindert werden, die sich ebenfalls nachteilig auf die Qualität der Schweißverbindung auswirken.

Vorzugsweise wird die Metallwanne anschließend beschichtet, insbesondere emailliert. Durch das erfindungsgemäße Verfahren wird sichergestellt, dass die zu beschichtende Fläche der Metallwanne vollkommen unbeeinflusst von der Kurzzeit-Lichtbogenschweißung ist. Die guten Beschichtungseigenschaften der Metallwanne werden auch in den Bereichen, die an ihrer Rückseite durch die Schweißverbindung einem Wärmeeinfluss ausgesetzt werden, nicht vermindert.

Die Erfindung wird im Folgenden anhand einer lediglich ein Ausführungsbeispiel darstellenden Zeichnung erläutert. Es zeigen schematisch:
- **Fig. 1a und Fig. 1b**: eine Metallwanne mit angeschweißter Aufhängelasche,
- **Fig. 2a und Fig. 2b**: eine Aufhängelasche mit einer als Kalotte ausgebildeten Ausprägung, die eine kreisförmige Grundfläche aufweist,
- **Fig. 3a und Fig. 3b**: eine Aufhängelasche mit einer als Kalotte ausgebildeten Ausprägung, die eine ovale Grundfläche und eine abgeflachte Kontaktfläche aufweist,
- **Fig. 4a und Fig. 4b**: eine Aufhängelasche mit einer als Kalotte ausgebildeten Ausprägung, die eine kreisförmige Grundfläche und eine Vertiefung in der Kontaktfläche aufweist,
- **Fig. 5a und Fig. 5b**: eine Erdungslasche.

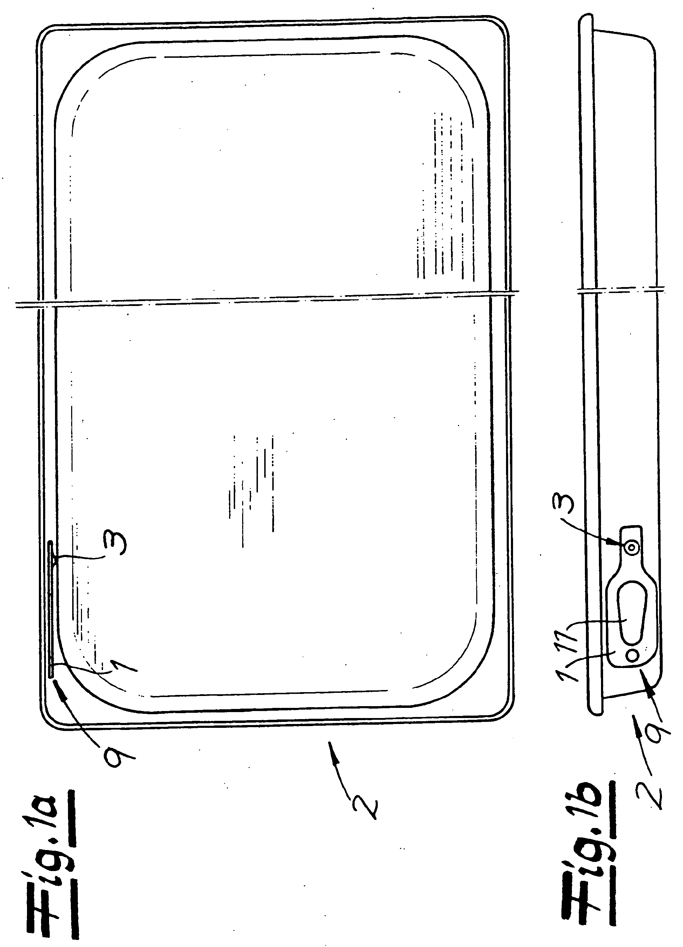

Fig. 1a und Fig. 1b zeigen schematisch eine Metallwanne 2 und einen laschenförmigen Blechstreifen 1, die nach dem erfindungsgemäßen Verfahren verbunden worden sind. Der Blechstreifen 1 wurde zuvor einer nicht dargestellten Pressvorrichtung zugeführt und mit einer Ausprägung 3 versehen. Diese Ausprägung 3 steht, wie man Fig. 1b entnehmen kann, von der Oberfläche des laschenförmigen Blechstreifens 1 vor. In der dargestellten Ausführung des Verfahrens wird der laschenförmige Blechstreifen 1 mit einer Kurzzeit-Lichtbogenschweißung an die Metallwanne 2 angeschweißt, wobei die Ausprägung 3 des Blechstreifens 1 über einer Anschweißstelle an der Metallwanne 2 positioniert wird, ein Lichtbogen zwischen der Ausprägung 3 und der Anschweißstelle gebildet wird, die Ausprägung 3 und die Anschweißstelle oberflächlich durch den Lichtbogen aufgeschmolzen werden, die Ausprägung 3 an die Anschweißstelle gedrückt wird und die Schweißverbindung zwischen der Ausprägung 3 und der Anschweißstelle gebildet wird.

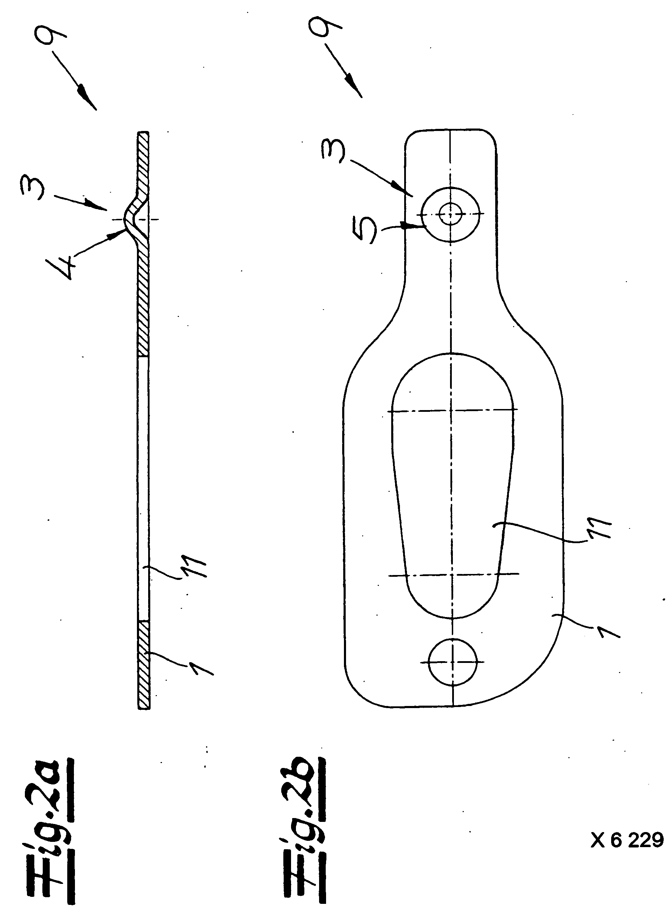

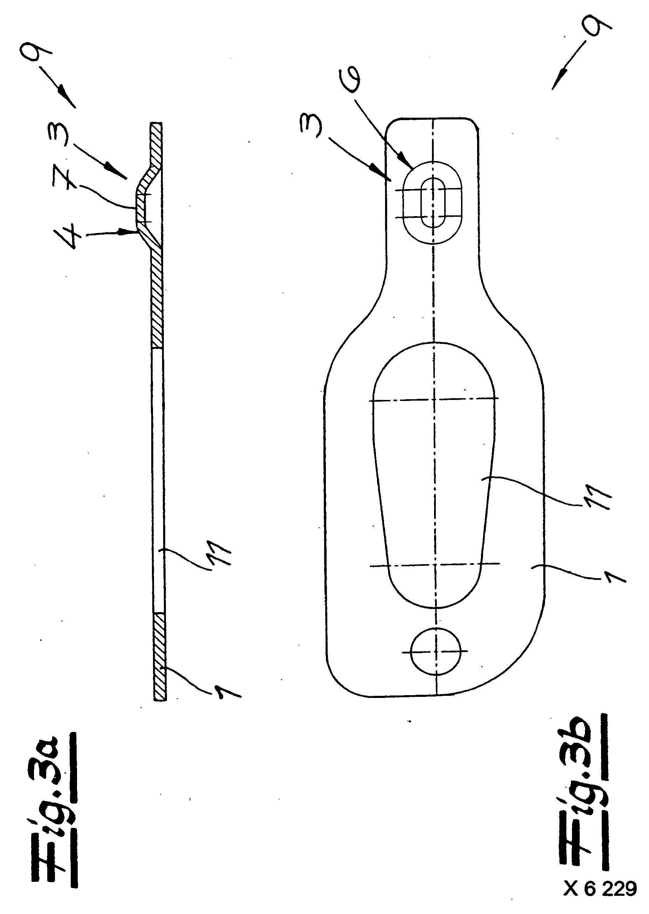

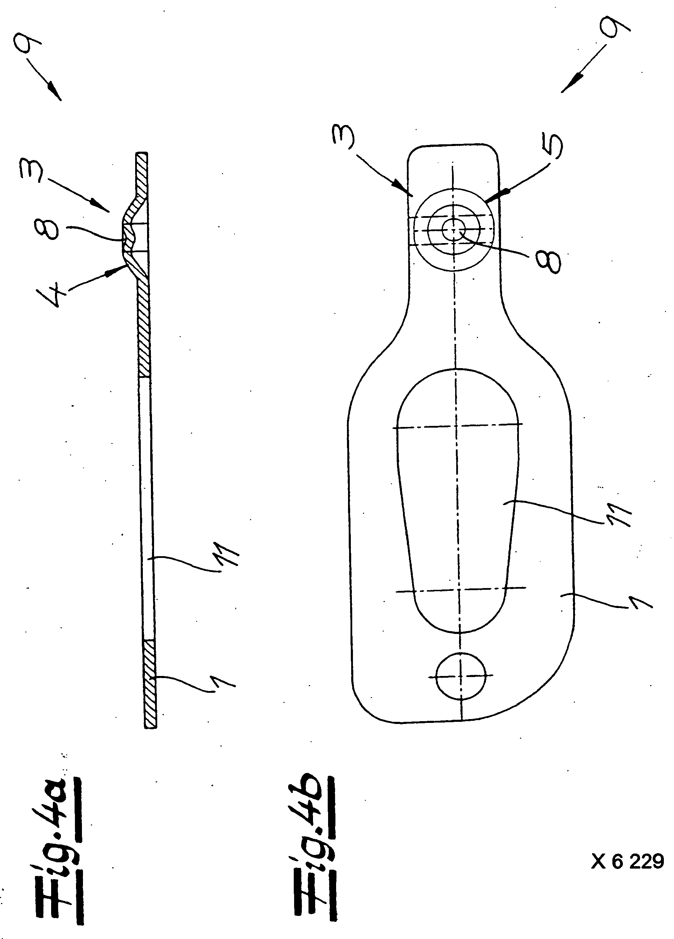

Fig. 2a und Fig. 2b entnimmt man, dass die Ausprägung 3 als Kalotte 4 oder Halbschale ausgebildet wird, wobei durch die kugelförmige Kalotte 4 oder Halbschale die Ausprägung 3 mit einer kreisförmigen Grundfläche 5 versehen wird. Der Durchmesser der dargestellten Ausprägung kann in ihrer Grundfläche 8 bis 12 mm, bevorzugt 10 mm, betragen. Das erfindungsgemäße Verfahren zum Befestigen eines Streifens 1 aus Metallblech an der Außenseite einer Metallwanne 2 kann zweckmäßig für das Verschweißen von Aufhängelaschen 9 mit einer Wanddicke von mindestens 2 mm verwendet werden. Die Höhe der Ausprägung 3 beträgt 3 bis 6 mm, bevorzugt 4,5 mm. Wie Fig. 2b zu entnehmen ist, befindet sich die Ausprägung 3 auf einer der für die Aufhängung der Metallwanne vorgesehenen Öse 11 gegenüberliegenden Seite der Aufhängelasche 9. Wie aus Fig. 3a und Fig. 3b ersichtlich ist, kann die Ausprägung 3 mit einer ovalen Grundfläche 6 und die so gebildete Kalotte 4 mit einer Abflachung 7 in der Kontaktfläche versehen werden. Eine weitere bevorzugte Ausführung der als Kalotte 4 ausgebildeten Ausprägung 3 ist in Fig. 4a und Fig. 4b dargestellt. Diese Ausführung weist eine kreisförmige Grundfläche 5 auf und wird zusätzlich an der Kontaktfläche mit einer Vertiefung 8 versehen. Die in den Fig. 2a bis 4b dargestellten Aufhängelaschen 9 weisen eine schmale und eine breite Seite auf. Auf der breiten Seite befindet sich die Öse 11 zur Aufhängung, und auf der schmalen Seite ist die Ausprägung 3 für das erfindungsgemäße Verfahren angeordnet. Die schmale Seite weist beispielsweise eine Breite von 15 bis 20 mm auf. Die Länge der Aufhängelasche 9 kann beliebig an den Verwendungszweck angepasst werden.

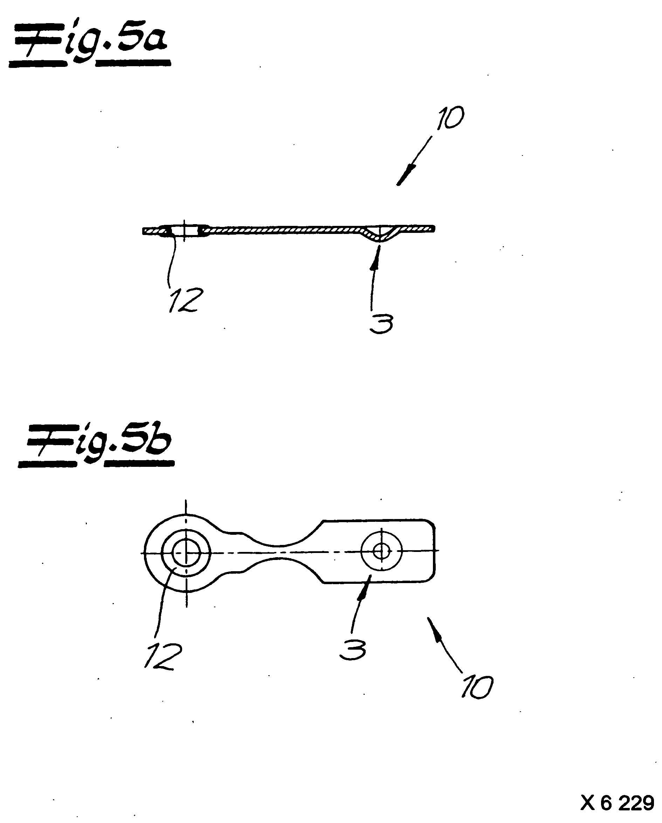

In Fig. 5a und Fig. 5b ist eine Erdungslasche 10 dargestellt, die nach dem erfindungsgemäßen Verfahren an der Außenseite einer Metallwanne befestigt werden kann. Die dargestellte Erdungslasche 10 wird dazu mit einer Ausprägung versehen, die als Kalotte oder Halbschale ausgebildet sein kann. Es versteht sich, dass die Ausprägung 3 der Erdungslasche 10 in der gleichen Weise gestaltet werden kann, wie die Ausprägungen 3 der in den Fig. 2a bis 4b dargestellten Aufhängelaschen 9. Fig. 5a und Fig. 5b entnimmt man ferner, dass die Erdungslasche an der der Ausprägung gegenüberliegenden Seite einen Abschnitt aus einer Kupferlegierung, beispielsweise in Form eines Hohlniets 12 aufweist. Die Abmessungen der Seite der Erdungslasche 10, die mit der Ausprägung 3 versehen wird, sind mit den Abmessungen der entsprechenden Seite der Aufhängelaschen 9 identisch.

Die Metallwanne kann vor oder nach dem außenseitigen Anschweißen eines oder mehrerer laschenförmiger Blechstreifen emailliert werden. Die Haftung der Emailleschicht auf dem metallischen Untergrund ist von der Oberflächenqualität der Metallwanne abhängig. Durch die erfindungsgemäße Verwendung der Kurzzeit-Lichtbogenschweißung wird die zu beschichtende Oberfläche der Metallwanne nicht negativ bezüglich ihrer Beschichtungseigenschaften beeinflusst. Insbesondere durch die Verwendung eines Schweißbadschutzes kann der durch die Schweißwärme beeinflusste Bereich sehr eng begrenzt werden. Des Weiteren wird durch den Einsatz eines Schweißbadschutzes die Bildung von Oxiden in der Schweißverbindung verhindert, durch die die Schweißverbindung geschwächt werden kann. Als Schweißbadschutz können einerseits Keramikringe oder andererseits Schutzgasatmosphären aus beispielsweise Reinargon oder aus einem Mischgas mit variablen Anteilen aus Argon und Helium verwendet werden.

## Patentansprüche

1. Verfahren zur Befestigung eines laschenförmigen Blechstreifens (1), insbesondere einer Aufhängelasche oder einer Erdungslasche, an der Außenseite einer Metallwanne (2), wobei der Blechstreifen (1) mit mindestens einer Ausprägung (3) versehen wird und die von der Oberfläche des Blechstreifens (1) vorstehende Ausprägung (3) durch eine Kurzzeit-Lichtbogenschweißung mit der Außenseite der Metallwanne (2) verbunden wird.

2. Verfahren nach Anspruch 1, **dadurch gekennzeichnet, dass** die Ausprägung (3) als Kalotte (4) oder Halbschale ausgebildet wird.

3. Verfahren nach einem der Ansprüche 1 oder 2, **dadurch gekennzeichnet, dass** die Ausprägung (3) mit einer kreisförmigen (5) oder ovalen (6) Grundfläche versehen wird.

4. Verfahren nach einem der Ansprüche 1 bis 3, **dadurch gekennzeichnet, dass** die Ausprägung (3) an einer Kontaktfläche mit einer Abflachung (7) oder Vertiefung (8) versehen wird.

5. Verfahren nach einem der Ansprüche 1 bis 4, **dadurch gekennzeichnet, dass** die Kurzzeit-Lichtbogenschweißung mit einem Schweißbadschutz durchgeführt wird.

6. Verfahren nach einem der Ansprüche 1 bis 5, **dadurch gekennzeichnet, dass** die Metallwanne (2) anschließend beschichtet, bevorzugt emailliert wird.

## Claims

1. A method for fastening a bracket-shaped sheet metal strip (1), particularly a suspension bracket or a grounding bracket, on the outer side of a metal tub (2), wherein the sheet metal strip (1) is provided with at least one stamping (3) and the stamping (3) protruding from the surface of the sheet metal strip (1) is connected to the outer side of the metal tub (2) by means of short-time arc welding.

2. The method according to claim 1, **characterized in that** the stamping (3) is realized in the form of a spherical cap (4) or half-shell.

3. The method according to one of claims 1 or 2, **characterized in that** the stamping (3) is provided with a circular (5) or oval (6) base area.

4. The method according to one of claims 1-3, **characterized in that** the stamping (3) is provided with a flattening (7) or depression (8) on a contact surface.

5. The method according to one of claims 1-4, **characterized in that** the short-time arc welding is carried out with weld pool protection.

6. The method according to one of claims 1-5, **characterized in that** the metal tub (2) is subsequently coated, preferably enameled.

## Revendications

1. Procédé de fixation d'une bande de tôle (1) en forme de languette, en particulier d'une languette de suspension ou d'une languette de mise à la terre, sur la face extérieure d'une cuve métallique (2), sachant que la bande de tôle (1) est dotée d'au moins une empreinte (3) et l'empreinte (3) en saillie de la face supérieure de la bande de tôle (1) est reliée à la face extérieure de la cuve métallique (2) par un soudage à l'arc bref.

2. Procédé selon la revendication 1, **caractérisé en ce que** l'empreinte (3) est formée en tant que calotte (4) ou demi-coque.

3. Procédé selon la revendication 1 ou 2, **caractérisé en ce que** l'empreinte (3) est dotée d'un fond circulaire (5) ou ovale (6).

4. Procédé selon l'une des revendications 1 à 3, **caractérisé en ce que** l'empreinte (3) est dotée d'un méplat (7) ou d'un creux (8) sur une surface de contact.

5. Procédé selon l'une des revendications 1 à 4, **caractérisé en ce que** le soudage à l'arc bref est effectué avec une protection par bain de fusion.

6. Procédé selon l'une des revendications 1 à 5, **caractérisé en ce que** la cuve métallique (2) est ensuite revêtue, de préférence émaillée.
